# DEMANDE DE BREVET EUROPEEN

(11) **EP 1 114 691 A1**
(43) Date de publication de la demande: **11.07.2001**
(21) Numéro de dépôt: 00403676.0
(22) Date de dépôt: 27.12.2000
(51) Int. Cl.: B23P 19/04

(54) **Dispositif de préhension d'un piston segmenté pour son insertion dans un bloc-cylindres de moteur, dispositif et poste d'insertion correspondants**

(30) Priorité: 06.01.2000 FR 0000127
(71) Demandeur: Renault Automation Comau, 92365 Meudon La Forêt Cedex (FR)
(72) Inventeur: Blondeau, Jean-Marc, 91330 Yerres (FR); Thurier, Yvan, 94320 Thiais (FR)
(74) Mandataire: Robert, Jean-Pierre

(57) **Abrégé**

Dispositif de préhension d'un piston (P) segmenté (S1, S2, S3) pour son insertion dans un cylindre (24) de bloc cylindres de moteur, comportant :
- un support (5) en forme de couronne circulaire plane avec un axe (9), limité par deux faces sensiblement perpendiculaires à l'axe, l'une des faces possédant des moyens pour son attelage à un bras manipulateur et l'autre face étant pourvue d'une pluralité de glissières radiales (8),
- une pluralité de mors (10), chacun monté à coulissement dans une glissière radiale (8) par un talon (11) et présentant une partie active (12) parallèle à l'axe du support, le talon (11) de chaque mors (10) comportant un doigt d'entraînement (18, 19) faisant saillie de la glissière (8) à l'opposé de la partie active (12),
- un plateau d'entraînement (20) des mors (10) le long des glissières (8), monté tournant sur le support (5) autour de son axe (9) et possédant des rainures spirales (21) coopérant avec les doigts (18, 19) des mors (10),
- la partie active de chaque mors (10) présentant une surface cylindrique (13) parallèle à l'axe (9) du support et de concavité tournée vers celui-ci.

## Description

La présente invention concerne un outil permettant d'insérer un piston segmenté - plus généralement un ensemble bielle, axe, piston - dans le bloc-cylindres d'un moteur à combustion interne.

Lors de l'assemblage d'un moteur, il convient d'introduire dans chacun des cylindres du carter cylindres déjà équipé de son vilebrequin, un ensemble formé d'un piston pourvu de ses segments et d'une bielle articulée à la jupe du piston par un axe. La mise en place de cet ensemble appelé BAP requiert de rétreindre les segments du piston à un diamètre au plus égal à celui du cylindre de sorte que le piston puisse pénétrer à la suite de la bielle dans le cylindre.

Une solution connue et surtout employée dans le domaine de la réparation consiste à encercler le piston d'un feuillard métallique pour rétreindre les segments dans leur gorge.

Le bord inférieur du feuillard est conformé pour venir en butée autour de l'ouverture du cylindre dans le plan de pose de la culasse et l'insertion du piston est réalisée au maillet pour faire glisser le piston vers le bas hors du feuillard. Cette solution ne se prête pas à la réalisation de l'opération au moyen d'un robot.

Dans une autre solution, on introduit le BAP dans un cône le long duquel les segments sont progressivement resserrés dans leur gorge au fur et à mesure de l'enfoncement du piston en direction du cylindre. Cette solution présente l'inconvénient de n'être pas flexible et donc de devoir mettre en oeuvre un cône différent par type de piston à insérer.

Par la présente invention, on propose une solution alternative qui peut être utilisée comme main de préhension d'un robot capable de saisir et d'insérer tout type de piston.

A cet effet, l'invention a pour premier objet un dispositif de préhension d'un piston segmenté pour son insertion dans un bloc-cylindres de moteur qui comporte :
- un support en forme de couronne circulaire plane avec un axe, limité par deux faces sensiblement perpendiculaires à l'axe, l'une des faces possédant des moyens pour son attelage à un bras manipulateur et l'autre face étant pourvue d'une pluralité de glissières radiales,
- une pluralité de mors, chacun monté à coulissement dans une glissière radiale par un talon et présentant une partie active parallèle à l'axe du support, le talon de chaque mors comportant un doigt d'entraînement faisant saillie de la glissière à l'opposé de la partie active,
- un plateau d'entraînement des mors le long des glissières, monté tournant sur le support autour de son axe et possédant des rainures spirales coopérant avec les doigts de chaque mors,
- la partie active de chaque mors présentant une surface cylindrique parallèle à l'axe du support et de concavité tournée vers celui-ci.

Cet outil se présente comme un mandrin de serrage à mors multiples qui d'une part, resserre les segments du piston à l'intérieur des gorges et d'autre part, constitue un organe de préhension de l'ensemble BAP pour le transporter, dans un poste d'insertion, entre un support qui porte cet ensemble, provenant d'une ligne de préparation et un posage du bloc-cylindres.

Pour que cette pince de préhension d'un piston segmenté soit le mieux adaptée possible à tous les pistons qu'elle doit prendre en charge, le rayon de la surface cylindrique de la partie active de chaque bord est égal au rayon du cylindre formé lorsque les surfaces cylindriques sont dans la continuité les unes des autres pour former une surface fermée autour de l'axe du support. Le rayon de ce cylindre sera au plus égal au rayon du plus petit piston à manipuler avec cette pince. Ainsi, chaque mors présente deux points ou portions génératrices qui sont en contact avec les segments du piston. Pour encore améliorer le contact entre mors et segments de pistons, la partie active de chaque mors comporte un corps en une seule pièce avec le talon et deux éléments porteurs chacun d'une partie de la surface cylindrique susdite et monté pivotant sur le corps autour d'un axe parallèle à l'axe du support annulaire. Ainsi, on peut disposer de quatre points ou portions de génératrice de contact par mors avec les segments, quel que soit le diamètre de ces segments.

Compte tenu de la plage des diamètres de piston qu'une telle pince aura à manipuler, on peut équiper une telle pince de seize mors coulissant radialement.

La partie active de chaque mors possède une extrémité opposée au talon qui est contenue avec l'extrémité des autres mors dans un plan commun perpendiculaire à l'axe du support. Ce plan commun constitue le plan d'assise de la pince sur le plan de pose de la culasse du bloc cylindre lors de l'introduction du piston au moyen d'un poussoir dans le cylindre correspondant.

Un second objet de l'invention est un dispositif d'insertion d'un piston dans un cylindre de bloc-cylindres de moteur comprenant un dispositif de préhension comme décrit ci-dessus et un organe poussoir dans lequel l'organe poussoir est porté par un bâti auquel est suspendu le support de l'organe de préhension sous l'organe poussoir. Cette liaison par suspension autorise certains degrés de liberté de la pince par rapport à ce bâti, degrés de liberté qui sont mis à profit lors de l'introduction du BAP dans le cylindre car, à ce moment d'une part, la jupe du cylindre constitue l'organe de centrage du BAP par rapport au cylindre, la pince étant alors libre de se déplacer par rapport au bâti dans un plan perpendiculaire à l'axe de ce cylindre et d'autre part, la suspension permet à la pince d'être totalement désolidarisée du bâti lorsque cette pince prend appui sur le plan de pose de la culasse. Ainsi, on est assuré d'une bonne mise en place du BAP qui peut être ensuite poussé à l'intérieur du cylindre par le poussoir mentionné ci-dessus même si ce poussoir n'est pas parfaitement aligné avec l'axe du cylindre.

Enfin, l'invention a également pour troisième objet un poste d'insertion d'un ensemble BAP dans le carter cylindres d'un moteur qui comprend un dispositif d'insertion comme décrit ci-dessus dont le bâti est attelé au bras manipulateur d'un robot, l'ensemble bielle, axe, piston (BAP) à insérer étant présenté à ce poste d'insertion sur un présentoir comprenant une paroi inclinée pourvue d'un doigt de suspension de l'ensemble par son axe de liaison du piston à la bielle, perpendiculaire à la paroi, cette dernière étant équipée d'un V de maintien de la jupe du piston formé par deux aiguilles ou rouleaux tournant autour de leur axe et situées dans un plan parallèle au doigt et perpendiculaire à la paroi inclinée, au niveau de la jupe du piston quand celui-ci est porté par le présentoir.

D'autres caractéristiques et avantages de l'invention ressortiront de la description d'un mode de réalisation donné ci-après à titre d'exemple.

Il sera fait référence aux dessins annexés parmi lesquels :
- la figure 1 illustre schématiquement un outil de préhension et d'insertion d'un piston dans un bloc-cylindres conforme à l'invention,
- la figure 2 est une vue schématique partielle de dessous de la figure 1 faisant apparaître le demi-plan de coupe I-I de la figure 1,
- la figure 3 illustre également schématiquement un support de BAP prêt à être inséré dans un bloc moteur,
- la figure 4 étant une vue schématique suivant F de la figure 4.

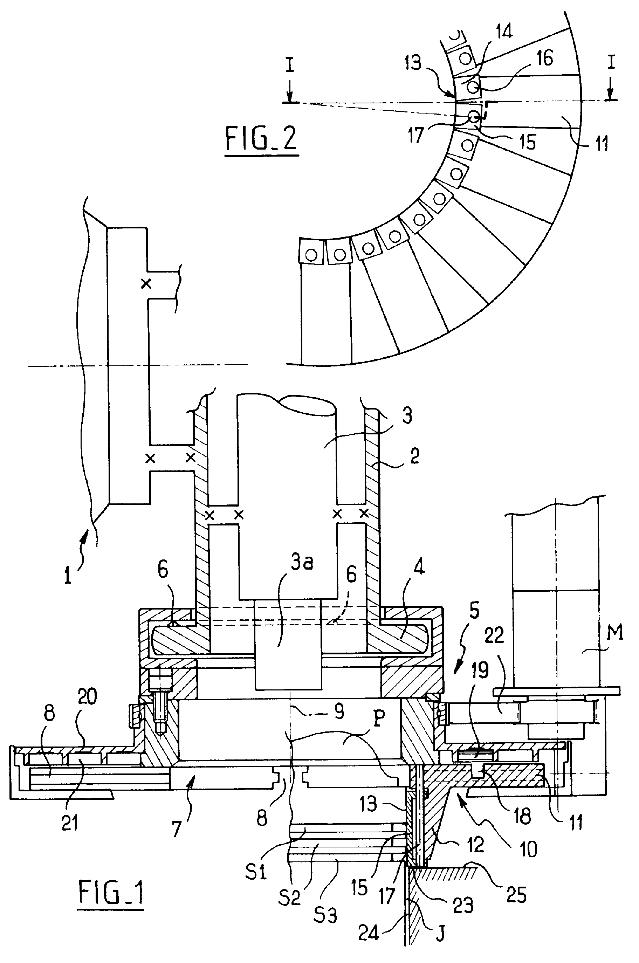

La figure 1 illustre une main de robot 1 qui est équipée d'un bâti 2 auquel est attelé un vérin 3 qui forme poussoir comme cela sera décrit par la suite. Le bâti 2 possède une collerette inférieure 4 qui constitue un organe de suspension pour un support 5 sur par exemple trois plots 6 de la collerette 4. Ce support 5 en forme de couronne annulaire, possède à sa partie inférieure une platine 7 pourvue de glissières radiales 8 régulièrement réparties autour de l'axe 9 du support 5. Dans chacune de ces glissières radiales, par exemple au nombre de seize, le dispositif comprend un mors 10 qui comporte un talon 11 monté à coulissement dans la glissière correspondante et une partie active 12 sensiblement perpendiculaire au talon 11, qui offre une surface cylindrique 13 parallèle à l'axe 9 et dont la concavité est tournée vers celui-ci.

Dans un mode de réalisation non représenté, cette surface 13 est réalisée directement par usinage du corps de la partie active 12. Dans le mode préféré de réalisation de l'invention tel que représenté aux figures 1 et 2, cette surface 13 est en réalité portée par deux éléments 14 et 15 articulés autour de pivots 16, 17 parallèles à l'axe 9 et portés par le corps de la partie active 12 du mors 10.

Lorsque les mors 10 sont rassemblés au plus près de l'axe 9, les surfaces 13 sont en continuité les unes avec les autres et forment ensemble une surface cylindrique d'axe 9 et de rayon égal au plus au rayon du plus petit piston que doit manipuler le dispositif de l'invention. Dans le cas où la surface 13 de chaque mors est unique et directement ménagée sur le corps de la partie active 12 de celui-ci, le contact de chaque mors avec les segments S1, S2, S3 d'un piston P à prendre en charge est réalisé au niveau des deux génératrices extrêmes de cette surface 13. Lorsque cette surface 13 est divisée en deux parties pour chaque mors, chacune portée par les éléments 14 et 15, le contact entre un mors et les segments est réalisé par quatre portions de génératrice. Chaque élément 14, 15 en contact par deux portions de génératrice avec chaque segment s'auto-oriente autour de son axe 16, 17 portant ainsi de manière équilibrée sur le segment et de manière adaptée à sa circonférence propre.

Le talon 11 de chaque mors possède un doigt 18 ici pourvu d'un galet 19 situé au-dessus de chaque glissière donc au-dessus de la platine 7, de manière à coopérer avec un plateau d'entraînement 20 qui possède des rainures spirales 21 ouvertes en direction de la platine 7 et dans lesquelles les galets 19 de chacun des mors 10 sont logés. Ce plateau 20 est monté à rotation autour du support 5. Son entraînement en rotation est assuré par une courroie 22 associée à un moteur numérisé M porté par le support 5. De manière connue en elle-même, le moteur M permet de commander précisément la rotation du plateau 20 tant en position angulaire autour de l'axe 9 qu'en couple d'entraînement. Par le jeu des rainures spirales, une rotation déterminée du plateau 20 engendre un déplacement radial déterminé uniforme de chacun des mors 10.

Chacun des éléments 14, 15 de chaque mors 10 possède une surface inférieure 23 qui est située dans un plan commun à toutes les autres surfaces inférieures des autres mors et perpendiculaire à l'axe 9.

Pour prendre en charge un piston P on place le dispositif selon l'invention, au moyen du robot 1, l'aplomb de celui-ci en ayant écarté les mors 10. La rotation du moteur M provoque le serrage de ces mors sur les segments S1, S2, S3 jusqu'à avoir obtenu une position et un couple déterminé donnés en consigne au moteur numérisé 23. Le robot 1 transporte ainsi le piston P équipé de son axe et de sa bielle non représentés aux figures 1 et 2 jusqu'à l'aplomb d'un cylindre de bloc-cylindres. Le cylindre est noté 24 sur la figure 1 avec la surface de pose 25 de la culasse sur le bloc-cylindres. Le piston P possède une partie de jupe J sous les segments S1, S2, s3 qui constituent un guide pour le centrage du piston par rapport au cylindre 24. Grâce aux degrés de liberté qui existent du fait de la suspension avec jeu du support 5 au bâti 2, notamment dans un plan perpendiculaire à l'axe 9, le piston est correctement aligné avec le cylindre 24. Lorsque la surface 23 vient au contact du plan du pose de la culasse 25, la pince s'oriente de manière que l'axe 9 corresponde à l'axe du cylindre 24 grâce encore aux degrés de liberté existant au niveau de l'attelage par suspension entre le support 5 et le bâti 2. On est alors certain que le piston P est parfaitement positionné par rapport au cylindre 24. On agit alors sur le moteur M pour relâcher le couple de serrage tout en conservant la positon des mors 10. Puis le poussoir 3 est mis en oeuvre, c'est-à-dire que la tige 3a du vérin dont il est constitué s'appuie sur la tête de piston P pour l'introduire dans le cylindre 24. Comme il existe une parfaite coïncidence entre la surface 23 de chacun des mors et le plan supérieur 25 du bloc cylindres, les segments S1, S2, S3 passent sans difficulté des mors 10 au cylindre 24 contre lequel ils viennent élastiquement s'appliquer.

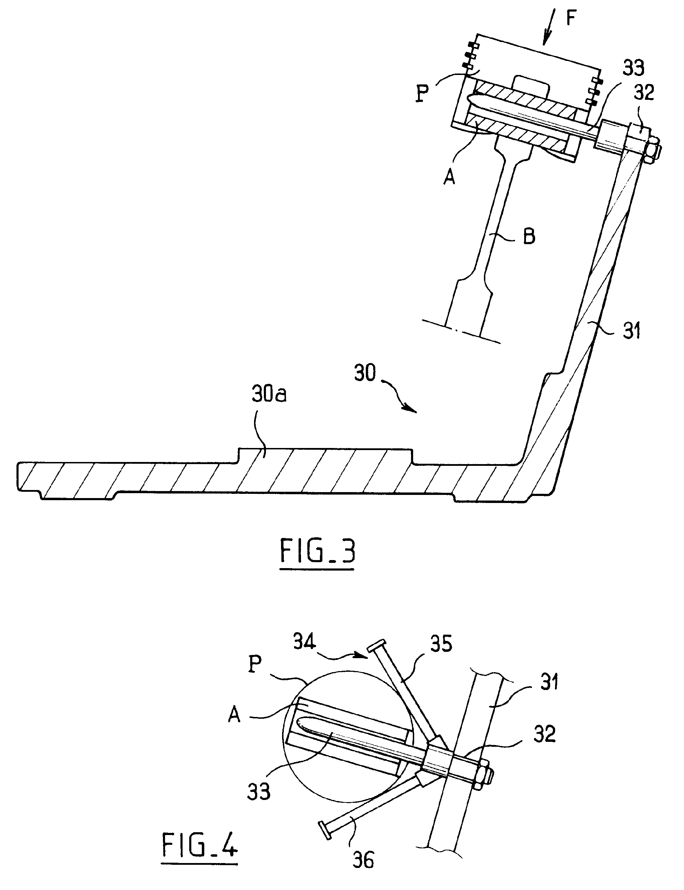

Aux figures 3 et 4, on a représenté un présentoir d'un ensemble BAP (bielle B, axe A, piston P) grâce auquel la préhension de l'ensemble BAP par le dispositif décrit en regard des figures précédentes est facilitée. Ce présentoir 30 possède une paroi latérale inclinée 31 au sommet de laquelle dans une encoche 32, un doigt 33 est fixé. Ce doigt 33 constitue un élément de suspension de l'ensemble BAP qui convient quelles que soient les dimensions de cet ensemble. Le présentoir comporte en outre une semelle inférieure 30a par lequel il est convoyé de et vers le poste d'insertion et qui est équipée de moyens de posage non représentés pour les éléments détachés du BAP qui sont assemblés sur une ligne secondaire, provenant par exemple d'un poste de segmentation des pistons et ensuite suspendus au doigt 33.

Afin que l'axe géométrique du piston soit maintenu dans un plan vertical qui contient le doigt 33, le présentoir 30 comporte un V 34 formé de deux aiguilles à rouleau ou douille tournante 35, 36, grâce auxquelles les frottements entre le V et la jupe du piston P qui s'appuie sur ce V sont réduits. Ainsi, du fait du poids de la bielle B, le piston P est maintenu de manière que son axe soit sensiblement vertical et parallèle à la paroi 31 du présentoir 30. Le maintien de cette verticalité est un facteur de bonne préhension de l'ensemble BAP par la pince représentée aux figures 1 et 2 qui est présentée à l'aplomb du piston P avec son axe 9 sensiblement dans l'axe du piston P grâce au robot 1 qui possède bien entendu tous les degrés de liberté pour assurer cette orientation de la pince par l'intermédiaire du bâti 2 et de l'accouplement à jeu entre ce bâti et le support 5. Les aiguilles à rouleau 35 et 36 sont situées en dessous des segments du piston, par exemple au niveau du doigt 33, ou légèrement sous celui-ci.

## Revendications

1. Dispositif de préhension d'un piston (P) segmenté (S1, S2, S3) pour son insertion dans un cylindre (24) de bloc cylindres de moteur, caractérisé en ce qu'il comporte :
- un support (5) en forme de couronne circulaire plane avec un axe (9), limité par deux faces sensiblement perpendiculaires à l'axe, l'une des faces possédant des moyens pour son attelage à un bras manipulateur et l'autre face étant pourvue d'une pluralité de glissières radiales (8),
- une pluralité de mors (10), chacun monté à coulissement dans une glissière radiale (8) par un talon (11) et présentant une partie active (12) parallèle à l'axe du support, le talon (11) de chaque mors (10) comportant un doigt d'entraînement (18, 19) faisant saillie de la glissière (8) à l'opposé de la partie active (12),
- un plateau d'entraînement (20) des mors (10) le long des glissières (8), monté tournant sur le support (5) autour de son axe (9) et possédant des rainures spirales (21) coopérant avec les doigts (18, 19) des mors (10),
- la partie active de chaque mors (10) présentant une surface cylindrique (13) parallèle à l'axe (9) du support et de concavité tournée vers celui-ci.

2. Dispositif selon la revendication 1, caractérisé en ce que le rayon de cette surface (13) cylindrique est égal au rayon du cylindre formé lorsque les surfaces cylindriques (13) sont dans la continuité les unes des autres pour former une surface fermée autour de l'axe (9) du support, le rayon du cylindre ainsi formé étant au plus égal au rayon du plus petit piston à manipuler.

3. Dispositif selon la revendication 2, caractérisé en ce que la partie active de chaque mors (10) comporte un corps (12) en une seule pièce avec le talon (11) et deux éléments (14, 15) porteurs chacun d'une partie de la surface cylindrique (13) susdite et est monté pivotant sur le corps autour d'un axe parallèle (16, 17) à l'axe (9) du support annulaire (5).

4. Dispositif selon l'une des revendications précédentes, caractérisé en ce que la partie active (12) de chaque mors possède une extrémité (23) opposée au talon contenue avec l'extrémité des autres mors dans un plan commun perpendiculaire à l'axe (9) du support (5).

5. Dispositif d'insertion d'un piston dans un cylindre de bloc-cylindres de moteur comprenant un dispositif de préhension selon l'une des revendications précédentes, et un organe poussoir (3), caractérisé en ce que l'organe poussoir (3) est porté par un bâti (2) auquel est suspendu le support (5) de l'organe de préhension sous cet organe poussoir (3).

6. Poste d'insertion d'un ensemble bielle, axe, piston (BAP) dans un cylindre (24) d'un moteur comprenant un dispositif selon la revendication 5 dont le bâti (2) est attelé au bras manipulateur d'un robot (1), caractérisé en ce qu'il comporte un présentoir (30) de l'ensemble bielle, axe, piston (BAP) à insérer comportant une paroi inclinée (31) pourvue d'un doigt (33) de suspension de l'ensemble BAP par son axe (A) de liaison du piston (P) à la bielle (B) perpendiculaire à la paroi (31), cette paroi étant également équipée d'un V (34) de maintien de la jupe du piston (P) formé par deux aiguilles à rouleaux tournants (35, 36) autour de leur axe, situées dans un plan parallèle au doigt (33) et perpendiculaires à la paroi inclinée (31).
